# DEMANDE DE BREVET EUROPEEN

(11) **EP 2 565 341 A2**
(43) Date de publication de la demande: **06.03.2013**
(21) Numéro de dépôt: 12181934.6
(22) Date de dépôt: 28.08.2012
(51) Int. Cl.: E04D 3/366, F24J 2/04, E04D 13/17, E04D 3/24, E04D 13/03, E04D 13/147, H01L 31/048, E04D 3/30, E04D 3/36

(54) **Dispositif d'intégration et de fixation d'un panneau photovoltaïque à une toiture**

(30) Priorité: 31.08.2011 FR 1157664; 07.06.2012 EP 12305652
(71) Demandeur: Integrasol, 09500 La Bastide de Bousignac (FR)
(72) Inventeur: Canet, Patrice, 11800 AIGUES-VIVES (FR); Delpeyrou, José, 11620 Villemoustaussou (FR)
(74) Mandataire: Rhein, Alain

(57) **Abrégé**

La présente invention concerne un dispositif (4) d'intégration et de fixation d'un panneau photovoltaïque (1) à une toiture (2), comprenant, d'une part, des moyens d'étanchéité avec ladite toiture (2) et, d'autre part, au moins une plaque (5) plane support destinée à recevoir en face supérieure ledit panneau (1) , ladite plaque (5) comprenant le long de chacun de ses bords longitudinaux, ménagée en saillie en face supérieure, au moins une nervure crénelée (9) d'emboîtement avec lesdits moyens d'étanchéité, caractérisé par le fait que lesdites nervures (9) sont espacées de manière à recevoir entre elles ledit panneau (1) et qu'elles sont dimensionnées de sorte quelles s'étendent supérieurement au moins en partie le long de la hauteur dudit panneau (1).

## Description

La présente invention entre dans le domaine de la construction, plus particulièrement dans la réalisation de toiture et de couverture de toiture.

L'invention concerne particulièrement l'intégration sur une toiture d'un panneau de couverture au sein des autres éléments de couverture, notamment des tuiles.

L'invention trouvera une application préférentielle, mais aucunement limitative, dans l'intégration et la fixation au sein d'une toiture d'au moins un panneau pour la captation d'énergie solaire et la génération d'électricité, tels des panneaux photovoltaïques.

De plus, l'invention se veut à même d'intégrer et de fixer un tel panneau sur une toiture préférentiellement recouverte de tuiles ou d'ardoises et supportée par une charpente en bois ou métallique, notamment de type « fermette industrielle ».

De manière connue, un panneau photovoltaïque est implanté sur une toiture au-dessus des éléments de couverture, notamment des tuiles ou des tôles ondulées ou crénelées. La fixation d'un tel panneau nécessite donc des moyens spécifiques qui viennent l'assujettir sur lesdites tuiles ou bien sur la charpente par dessus ces tuiles. De nombreuses solutions ont été imaginées, sous forme de pattes ou de profilés supportant le panneau et fixés au travers des tuiles, directement sur la charpente de la toiture.

Un exemple de ce type de fixation est décrit dans le document EP 2 328 181. Un premier inconvénient réside dans le fait de traverser les tuiles existantes, entrainant des problèmes d'étanchéité de la couverture et diminuant la résistance des matériaux percés. De plus, une telle solution ne permet pas d'intégrer le panneau à la toiture, provoquant des risques d'arrachement en cas de fortes intempéries, notamment par vent fort.

C'est pourquoi il a été imaginé d'implanter directement les moyens supportant le panneau photovoltaïque sur la charpente de la toiture, le panneau venant alors remplacer l'élément de couverture sur la zone qu'il recouvre. Toutefois, il est alors nécessaire d'assurer une parfaite étanchéité au niveau dudit panneau, pour conserver l'intégrité du ruissellement le long de la pente, entre les éléments de couverture et les panneaux ainsi implantés.

De plus, l'implantation directe de panneaux sur la charpente pose un problème de ventilation de ces derniers en face inférieure. En effet, en fonctionnement, la hausse de température due à l'ensoleillement diminue le rendement d'un panneau photovoltaïque.

Une solution alternative a été imaginée sous la forme de tuiles intégrant dans leur matériau des capteurs photovoltaïques. Des exemples de ces tuiles photovoltaïques sont décrits dans les documents FR 2 947 099, EP 2 169 727 et EP 2 180 525. Si ces tuiles offrent une pose aisée et traditionnelle, dans la continuité des autres tuiles, leur connexion électrique nécessite un réseau complexe à mettre en place au niveau de la toiture. De plus, le coût de ces tuiles est nettement plus élevé pour un rendement qui n'atteint pas celui d'un panneau photovoltaïque de plus grande surface. Enfin, le fait d'enfermer le capteur solaire au sein de la tuile rend plus difficile son refroidissement.

Une solution alternative est décrite dans le document EP 1 310 747 et consiste à remplacer les tuiles d'une zone de la toiture, de dimensions équivalentes à la surface des panneaux à implanter, par des tôles crénelées, emboîtées au niveau de leurs bords longitudinaux respectifs et directement fixées à la charpente. Les panneaux sont ensuite positionnés sur les tôles, reposant au niveau des crêtes plates sous-jacentes, et maintenus en fixation sur lesdites tôles.

En somme, il s'agit simplement de remplacer les tuiles par des plaques crénelées et d'y assujettir les panneaux par-dessus, sans les intégrer réellement à la toiture, notamment sa charpente.

Un inconvénient de cette solution réside dans l'emboîtement des tôles crénelées, de dimensions identiques. En effet, les dimensions strictement égales des crêtes provoquent un emboîtement non optimal, avec un jeu laissant passer l'air mais aussi l'humidité, voire l'eau.

De plus, les panneaux se retrouvent alors surélevés, dépassant de la face supérieure de la toiture. Outre l'aspect moins esthétique, cette intégration au-dessus de la toiture est préjudiciable, notamment en cas de fortes intempéries.

La présente invention a pour but de pallier les inconvénients de l'état de la technique, en proposant un dispositif de fixation et d'intégration à une toiture d'au moins un panneau photovoltaïque.

En particulier, un tel dispositif permet d'implanter directement ledit panneau sur la charpente au sein même des éléments de couverture, notamment les tuiles, en assurant une parfaite étanchéité dans la continuité du ruissellement. De plus, cette intégration s' effectue dans l'épaisseur de la couverture de toiture existante, sans saillie ou débordement en partie supérieure au niveau de la pente du toit.

Pour ce faire, le dispositif selon l'invention comprend, d'une part, des moyens d'étanchéité avec ladite toiture et, d'autre part, au moins une plaque plane support destinée à recevoir en face supérieure ledit panneau, ladite plaque comprenant le long de chacun de ses bords longitudinaux, ménagée en saillie en face supérieure, au moins une nervure crénelée d'emboîtement avec lesdits moyens d'étanchéité. Ce dispositif se caractérise par le fait que lesdites nervures sont espacées de manière à recevoir entre elles ledit panneau et qu'elles sont dimensionnées de sorte qu'elles s'étendent supérieurement au moins en partie le long de la hauteur dudit panneau.

Avantageusement, un tel dispositif assure aussi une ventilation et un refroidissement de la face inférieure dudit panneau ainsi implanté, au travers de la circulation naturelle ou forcée d'un flux d'air laminaire.

Selon d'autres caractéristiques, lesdits moyens d'étanchéité comprennent au moins deux profilés droit et gauche pourvus chacun d'une nervure complémentaire constituant une partie femelle coopérant par emboîtement en recouvrement de ladite nervure de la plaque constituant une partie mâle.

Préférentiellement, lesdits moyens d'étanchéité comprennent au moins un cache transversal conformé de manière à venir coopérer par emboîtement en recouvrement du bord supérieur de ladite plaque et des extrémités supérieure desdits profilés droit et gauche.

Selon un mode de réalisation, ledit cache comprend au moins deux fentes latérales conformées et dimensionnées de manière à venir coopérer par emboîtement sur lesdites nervures et nervures complémentaires emboîtées.

Selon un autre mode de réalisation, ledit dispositif comprend au moins une grille d'aération coopérant en fixation au niveau du bord supérieur de ladite plaque, ladite grille présentant une section crénelée parallélépipédique dont les bords saillants en partie supérieure sont traversés d'orifices de circulation d'air.

De manière additionnelle, ladite plaque peut comprendre au moins une ouverture centrale ménagée traversante.

Préférentiellement, ladite ouverture présente sur son pourtour une collerette saillante en partie supérieure dont le chant supérieur constitue des moyens d'appui sur lesquels repose en rehaussement ledit panneau photovoltaïque.

De plus, il est possible d'intégrer un tel dispositif lors de la réalisation d'une toiture, ou sur une toiture déjà existante, des panneaux photovoltaïques, tout en respectant les normes et législations en vigueur.

D'autres caractéristiques et avantages de l'invention ressortiront de la description détaillée qui va suivre des modes de réalisation non limitatifs de l'invention, en référence aux figures annexées, dans lesquelles :
- la figure 1 représente une vue en perspective d'une toiture au sein de laquelle sont implantés quatre panneaux photovoltaïques au moyen d'un dispositif selon l'invention ;
- la figure 2 représente une vue éclatée en perspective d'un panneau lors de son montage en fixation sur un tel dispositif ; et
- les figures 3 à 8 représentent des vues en perspective des éléments séparés du dispositif selon l'invention.

La présente invention concerne la fixation et l'intégration d'au moins un élément de couverture de toiture, de type panneau photovoltaïque 1, au sein de la toiture 2 d'un bâtiment, offrant une implantation directement au niveau de la couverture de toiture, en particulier sur la charpente au sein et dans l'épaisseur des tuiles 3 recouvrant ladite toiture 2.

Pour ce faire, l'invention a pour objet un dispositif 4 de fixation et d'intégration d'au moins un panneau photovoltaïque 1 au sein d'une toiture 2.

Avantageusement, un tel dispositif 4 comprend au moins une plaque 5 support destinée à recevoir en partie supérieure ledit panneau 1. En somme, ladite plaque 5 est dimensionnée pour recevoir en appui sur sa face supérieure 6 la face inférieure d'un panneau 1. En d'autres terme, ladite plaque 5 peut présenter des dimensions équivalentes, notamment supérieures, aux longueur et largeur du ou des panneaux 1 qu'elle supporte.

Selon le mode préférentiel de réalisation, représenté sur les figures, une unique plaque 5 reçoit un panneau 1. Selon un autre mode de réalisation, plusieurs plaques 5 peuvent être juxtaposées et agencées de manière à recevoir un unique panneau 1 ou plusieurs panneaux.

On notera que ladite plaque 5 peut être constituée d'une tôle, de préférence métallique, de forme parallélépipédique rectangle. Une telle tôle est plane ou plate sur la majorité de sa surface, en dehors des éléments décrits par la suite.

De plus, ledit dispositif 4 comprend des moyens d'étanchéité avec ladite toiture 2. De tels moyens assurent l'étanchéité entre la plaque 5, notamment ses bords, et les éléments de couverture, notamment les tuiles.

On notera que ces moyens d'étanchéité sont constitués d'éléments distincts et indépendants de ladite plaque 5.

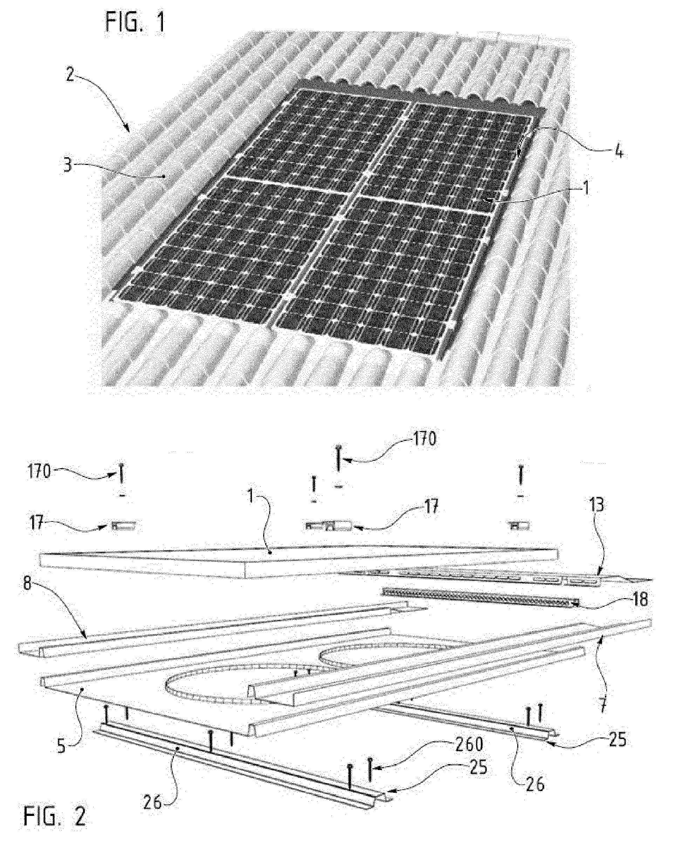

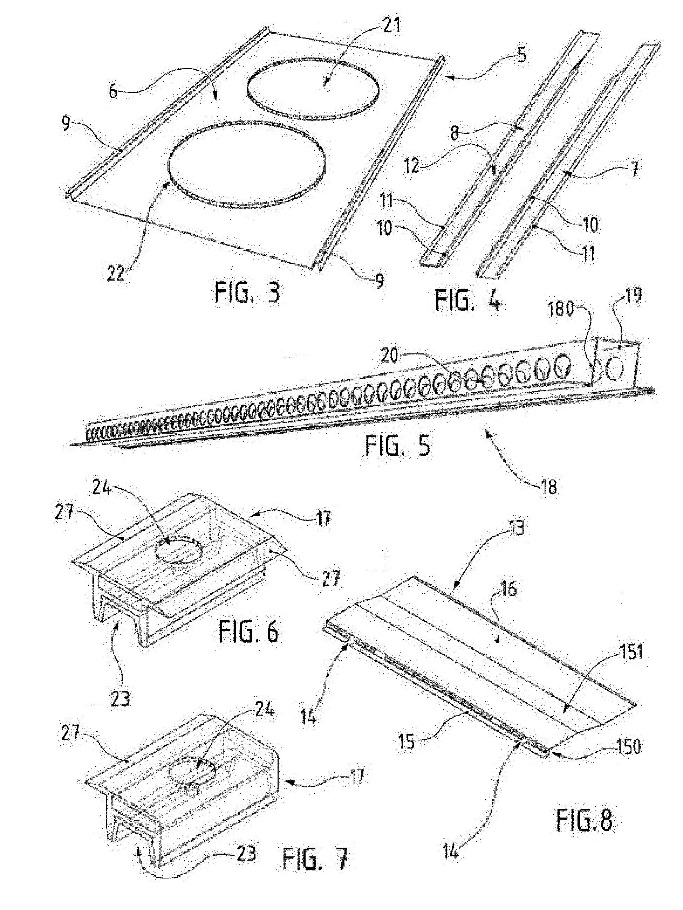

Selon un mode particulier de réalisation, comme visible sur les figures 2 et 4, lesdits moyens d'étanchéité comprennent au moins deux profilés droit 7 et gauche 8. Ces derniers viennent en recouvrement des bords latéraux de ladite plaque 5.

On notera qu'à ce niveau, plusieurs profilés droits 7 et gauches 8 peuvent être positionnés bouts à bouts, alors alignés, le profilé supérieur recouvrant le profilé inférieur dans le sens de la pente afin, d'une part, d'assurer le ruissellement de manière étanche et, d'autre part, de s'étendre sur au moins toute la longueur de ladite plaque 5.

A ce titre, avantageusement, ladite plaque 5 comprend le long de chacun de ses bords longitudinaux une nervure crénelée 9 d'emboîtement avec lesdits moyens d'étanchéité. Une telle nervure 9 est ménagée en saillie en face supérieure de la plaque 5 et peut être tronconique, présentant une face supérieure plane.

Par ailleurs, un avantage majeur de la présente invention réside dans la possibilité d'emboîter deux plaques 5 côte à côte par l'intermédiaire de leur nervure 9 respective, assurant ainsi une jonction étanche entre les deux dites plaques 5, l'une des plaques constituant alors lesdits moyens d'étanchéité précédemment évoqués.

Selon le mode préférentiel de réalisation, chaque profilé droit 7 et gauche 8 comprend une nervure complémentaire 10 constituant une partie femelle coopérant par emboîtement en recouvrement de ladite nervure 9 de la plaque 5, cette nervure complémentaire 10 constituant alors une partie mâle.

Dès lors, le crénelage des nervures complémentaires 10 et des nervures 9 présentent une forme similaire afin d'autoriser réciproquement l'insertion par le dessus des unes au sein des autres. Selon le mode préférentiel de réalisation, ledit crénelage est tronconique. Cette forme spécifique facilite l'emboîtement et améliore l'étanchéité à l'eau et à l'air. En effet, même avec des pant inclinés latéraux de pentes sensiblement différentes, l'emboîtement des nervures 9 et 10 reste possible et la différence de pente assure un contact et, par conséquent, l'étanchéité entre les éléments ainsi emboîtés.

Par ailleurs, on notera que l'espacement entre les nervures 9 d'une plaque 5 peut être dimensionné en fonction de la largeur du panneau 1 qui vient s'insérer entre elles, maintenu alors bloqué en translation entre elles.

En d'autres termes, lesdites nervures 9 sont espacées de manière à recevoir entre elles ledit panneau 1. Préférentiellement, la distance entre les deux nervures 9 correspond à la largeur d'un panneau 1. A ce titre, on notera que lesdits nervures 9 s'étendent parallèlement l'une par rapport à l'autre sur toute ou partie des bords longitudinaux de ladite plaque 5. En outre, la distance d'espacement est mesurée au niveau de la pliure située intérieurement à partir de laquelle s'étend le pan incliné intérieur de chaque nervure 9.

De plus, les nervures 9 sont dimensionnées de sorte qu'elles s'étendent supérieurement au moins en partie le long de la hauteur dudit panneau 1. En somme, la hauteur de la crête est inférieure, égale ou supérieure à l'épaisseur d'un panneau 1, de sorte que lesdites rainures viennent l'encadrer de part et d'autre et que ledit panneau 1 est encastré à l'intérieur de la plaque 5 ainsi constituée.

Selon une caractéristique additionnelle, lesdites nervures 9 et nervures complémentaires 10 peuvent être réalisées par pliage, manuellement ou automatiquement, notamment au travers d'une plieuse tronconique numérique. En particulier, les dimensions intérieures, situées en face inférieure, de chaque nervure complémentaire 10 sont légèrement supérieures aux dimensions extérieures, situées en face supérieure, de chaque nervure 9. Cette différence peut être de 0,1 à 5 millimètres (mm), de préférence entre 0,5 et 1 mm. Ainsi, l'emboîtement de parois des nervures 9,10 s'effectue parfaitement, sans jeu, ne laissant passer ni air ni humidité.

Selon des modes de réalisation spécifique, une fois emboîtées, lesdites nervures 9 et 10 peuvent être maintenues ensembles par le dessus au travers de pattes de fixation 17. Ces dernières peuvent présenter deux formes distinctes, visibles sur les figures 6 et 7, si elles sont réciproquement placées entre deux plaques 5 emboîtées ou bien au niveau de la jonction en emboîtement d'une plaque 5 et d'un profilé 7 ou 8 (à savoir en bordure de l'implantation du dispositif 4).

De plus, des telles pattes 17 peuvent présenter une embase creuse, conformée complémentaire au crénelage desdites nervures 7 et 8, afin de ménager un logement 23 pour leur emboîtement. En somme, un évidement est réalisé en partie basse dans chaque patte 17, cet évidement ayant une forme évasée, permettant l'insertion à l'intérieur d'au moins une partie de la saillie tronconique des nervures 9 et 10, en particulier d'une nervure complémentaire 10 emboîtée par-dessus une nervure 9. En outre, chaque patte 17 est aussi traversée par un trou ou un taraudage 24 pour le passage d'une vis de fixation 170. Selon le mode préférentiel de réalisation, de telles vis 170 peuvent être prévues autoforantes et viennent traverser les nervures 7 et 8 pour venir se ficher directement dans la charpente de la toiture 2, au niveau des liteaux, au travers de moyens d'accroches 25.

Selon une autre caractéristique, chaque patte 17 peut présenter des ailes latérales 27 destinées à maintenir les bords du panneau 1, alors solidarisé sur le dispositif 4. Ces ailes 27 peuvent être au nombre de deux ou une, en fonction de la patte 17 pour un positionnement, réciproquement, entre deux panneaux 1 ou au niveau d'un bord d'un seul panneau 4 à maintenir.

Par ailleurs, comme représenté sur la figure 2, lesdits moyens d'accroche 25 peuvent se présenter sous la forme de profilés transversaux 26, fixés directement sur la charpente, parallèlement au faîtage, sous le dispositif 4 qui vient alors reposer dessus, en particulier la plaque 5. Ainsi, il est possible de positionner avec précision ces profilés 26, les ajustant en fonction des dimensions du panneau 1, définissant les endroits de vissage de vis 260, notamment en fonction des caractéristiques définies par le constructeur dudit panneau 1.

De plus, lesdits profilés transversaux 26 présentent une section de forme en U inversée ou en oméga, à savoir que leur section forme une onde arrondie ou crénelé en particulier avec une face supérieure plane destinée à servir de zone d'appui aux faces inférieures des autres éléments, notamment la plaque 5. Ainsi, de tels profilés transversaux 26 peuvent venir recouvrir et s'emboîter sur les liteaux existants au niveau de la toiture 2 ou qui y seront spécifiquement fixés au préalable. Ils constituent alors une ossature supplémentaire, raidissant et renforçant la structure générale du dispositif 4 assemblé.

De plus, comme visibles sur les figures 2 et 4, les profilés droits 7 et gauches 8 peuvent se présenter sous une forme plane longitudinale, équipée sur leur bord intérieur de ladite nervure complémentaire 10 en saillie en face supérieure, tel un décroché vers le haut, et présentant au niveau du bord opposé un bord 11 en saillie en face supérieure. Ainsi, entre la nervure complémentaire 10 et ledit bord 11, est ménagé un espace plan 12, telle une rigole ou une gouttière en vue du ruissellement de l'eau. De plus, ledit bord 11 et une partie de cet espace plan 12 viennent recevoir en recouvrement le bord des éléments de couverture, notamment les tuiles.

Selon une caractéristique additionnelle, comme visible sur les figures 2 et 8, lesdits moyens d'étanchéité peuvent aussi comprendre au moins un cache transversal 13 conformé de manière à venir coopérer par emboîtement en recouvrement du bord supérieur de ladite plaque 5 et des extrémités supérieures desdits profilés droit 7 et gauche 8. En somme, un tel cache 13 assure la jonction étanche entre la partie haute de la toiture 2 et le dispositif 4, en particulier le haut de la plaque 5.

De plus, ledit cache 13 comprend au moins deux fentes 14 latérales conformées et dimensionnées de manière à venir coopérer par emboîtement sur lesdites nervures 9 et nervures complémentaires 10 emboîtées. En somme, les fentes 14 ont une forme en V inversé tronqué et permettent d'introduire les nervures 9 et 10 au moment du positionnement en recouvrement par le cache 13.

On notera que ledit cache 13 présente un bord plan 15 rehaussé sur une hauteur sensiblement équivalente à l'épaisseur dudit panneau 1, lesdites fentes 14 étant ménagées au sein de la partie verticale d'un tel décroché 150. De plus, au niveau dudit bord plan 15, ledit cache est divisé de part et d'autre desdites fentes 14.

Du côté opposé, le cache 13 présente une pente décroissante 151 depuis ledit rehaussement 150 vers la bord opposé audit bord plan 15 pour revenir sur une surface plane 16 au même niveau que ledit bord 15. On notera que cette surface vient recevoir en recouvrement les extrémités des éléments de couverture, notamment les tuiles, située au dessus de la zone où est implanté le dispositif 4. Ainsi, l'étanchéité de la pente de ruissellement est assurée à ce niveau.

Selon une caractéristique additionnelle, comme visible sur les figures 2 et 5, ledit dispositif 4 comprend au moins une grille d'aération 18 coopérant en fixation au niveau du bord supérieur de ladite plaque 5, cette dernière présentant une section crénelée 19 parallélépipédique dont les bords verticaux 180 ou inclinés, saillants en partie supérieure, sont traversés d'orifices 20 de circulation d'air.

En particulier, une telle grille 18 peut être positionnée sous le cache 13, au niveau du rehaussement, au dessus vers le haut de la pente.

Ainsi, l'air peut circuler sous le cache 15 et surtout sous le panneau photovoltaïque 1, sous forme d'un flux laminaire, notamment naturel ascendant ou bien forcé par des moyens de ventilation (non représentes), assurant son refroidissement en face inférieure.

De plus, elle assure un filtre pour les déchets et les insectes.

Selon une autre caractéristique additionnelle, ladite plaque 5 comprend au moins une ouverture centrale 21 ménagée traversante. Selon le mode de réalisation préférentiel représenté sur les figures 2 et 3, la plaque 5 comporte deux ouvertures 21, prévues circulaires ou bien ovoïdales, ménagées approximativement au centre de ladite plaque 5.

En outre, ces ouvertures 21 permettent d'accéder directement à la face inférieure du panneau 1. Elles permettent aussi une aération supplémentaire directement avec la charpente de la toiture 2 sous-jacente, tout en rendant la plaque 5 non étanché en son centre, lorsqu'elle n'est pas recouverte par un panneau 1, conformité nécessaire pour les législations et les normes en vigueur.

De plus, chaque ouverture 21 peut présenter sur la totalité de son pourtour une collerette 22 saillante en partie supérieure (un cerceau annulaire circulaire dans le cas d'une ouverture ronde ou ovale) dont le chant supérieur constitue des moyens d'appui sur lesquels repose en rehaussement ledit panneau photovoltaïque 1. Dès lors, autour de ladite collerette 22, est créé en espace entre la face supérieure de la plaque 5 et la face inférieure du panneau 1, améliorant la circulation du flux d'air de refroidissement.

De plus, le chant supérieur de cette collerette 22 peut être surmonté d'un joint, assurant l'étanchéité avec la face inférieure du panneau 1 ainsi qu'une isolation électrique.

Selon le mode préférentiel de réalisation, tous les éléments constituant le dispositif 4 selon l'invention sont constitués en un matériau métallique, sous forme de tôle pliée, emboutie et/ou laminée.

De plus, entre les différents éléments constituant le dispositif 4 peuvent être ajoutés des joints, sous forme de bandes ou rondelles, notamment en caoutchouc synthétique ou naturel, positionnés au niveau des nervures 9 et 10, ou bien des pattes 17, ou encore des vis 170 et 260.

Lors de l'implantation du dispositif 4, on retire les éléments de couverture, notamment les tuiles ou les ardoises, sur la zone où sera placé ledit dispositif 4, ainsi que ceux situés en bordure. Dans le cas d'une implantation lors de la réalisation d'une toiture neuve, on délimite la zone de positionnement et les tuiles seront positionnées ensuite autour, en particulier en recouvrement des bords du dispositif 4.

Tout d'abord, on vient fixer les profilés transversaux 26, directement sur les liteaux existants ou bien entre eux, en fonction des dimensions et caractéristiques dudit panneau 1. Ces profilés 26 sont fixé par vissage des vis 260, notamment au moyen de vis autoforantes, directement à la charpente, au niveau de leur bordures longitudinales latérales planes.

Ensuite, la plaque 5 est positionnée sur lesdits profilés 26. Sont placées les profiles droits 7 et gauches 8 par emboîtement sur les nervures 9 respectives de la plaque 5, ou bien de plusieurs plaques 5 adjacentes et emboîtées.

Puis, ladite grille 18 est positionnée en partie haute de la plaque 5 située le plus haut. Le cache 15 est alors placé en recouvrement de ladite grille 18 et du bord haut de la plaque 5.

Enfin, le ou les panneaux 1 sont placés et insérés au centre de chaque plaque 5, entre les nervures 9.

Finalement, cet assemblage est maintenu par les pattes 17 de fixation, avec vissage des vis 170 directement au travers des matériaux, jusqu'à venir perforer chaque profilé transversal 26.

Ainsi le dispositif 4 selon l'invention permet rapidement et aisément l'implantation de panneau photovoltaïque 1, en assurant l'étanchéité et la continuité du ruissellement de la toiture. De plus, une telle implantation est assurée dans l'épaisseur de la toiture 2, en particulier au sein des éléments de couverture existants, sans saillie.

## Revendications

1. Dispositif (4) d'intégration et de fixation d'un panneau photovoltaïque (1) à une toiture (2), comprenant, d'une part, des moyens d'étanchéité avec ladite toiture (2) et, d'autre part, au moins une plaque (5) plane support destinée à recevoir en face supérieure ledit panneau (1), ladite plaque (5) comprenant le long de chacun de ses bords longitudinaux, ménagée en saillie en face supérieure, au moins une nervure crénelée (9) d'emboîtement avec lesdits moyens d'étanchéité, **caractérisé par le fait que** lesdites nervures (9) sont espacées de manière à recevoir entre elles ledit panneau (1) et qu'elles sont dimensionnées de sorte qu'elles s'étendent supérieurement au moins en partie le long de la hauteur dudit panneau (1).

2. Dispositif (4) selon la revendication 1, **caractérisé en ce que** ladite plaque (5) comprend au moins une ouverture (21) centrale ménagée traversante, ladite ouverture (21) présentant sur son pourtour une collerette (22) saillante en partie supérieure dont le chant supérieur constitue des moyens d'appui sur lesquels repose en rehaussement ledit panneau photovoltaïque (1).

3. Dispositif (4) selon la revendication 1, **caractérisé par le fait que** lesdits moyens d'étanchéité comprennent au moins deux profilés droit (7) et gauche (8) pourvus chacun d'une nervure complémentaire (10) constituant une partie femelle coopérant par emboîtement en recouvrement de ladite nervure (9) de la plaque (5) constituant une partie mâle.

4. Dispositif (4) selon la revendication 3, **caractérisé par le fait que** lesdits moyens d'étanchéité comprennent au moins un cache transversal (13) conformé de manière à venir coopérer par emboîtement en recouvrement du bord supérieur de ladite plaque (5) et des extrémités supérieures desdits profilés droit (7) et gauche (8).

5. Dispositif (4) selon la revendication 4, **caractérisé par le fait que** ledit cache (13) comprend au moins deux fentes (14) latérales conformées et dimensionnées de manière à venir coopérer par emboîtement sur lesdites nervures (9) et nervures complémentaires (10) emboîtées.

6. Dispositif (4) selon la revendication 1, **caractérisé par le fait qu'**il comprend au moins une grille d'aération (18) coopérant en fixation au niveau du bord supérieur de ladite plaque (5), ladite grille (18) présentant une section crénelée parallélépipédique dont les bords saillants en partie supérieure sont traversés d'orifices (20) de circulation d'air.
